# EUROPEAN PATENT APPLICATION

(11) **EP 4 830 973 A1**
(43) Date of publication of application: **28.10.2026**
(21) Application number: 26173660.7
(22) Date of filing: 21.04.2026
(51) Int. Cl.: B60K 35/81

(54) **DISPLAY CONTROL DEVICE AND DISPLAY CONTROL PROGRAM**

(30) Priority: 24.04.2025 JP 2025072673
(71) Applicant: Toyota Jidosha Kabushiki Kaisha, Toyota-shi, Aichi-ken 471-8571 (JP)
(72) Inventor: HATTORI, Tsutomu, TOYOTA-SHI, AICHI-KEN, 471-8571 (JP); KONISHI, Shogo, TOYOTA-SHI, AICHI-KEN, 471-8571 (JP); TAKADA, Arata, TOYOTA-SHI, AICHI-KEN, 471-8571 (JP); NISHIDA, Takashi, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A display control device (50) that displays an image illustrating surrounding conditions of a vehicle (10) as if looking from a virtual viewpoint positioned at a rear of the vehicle (10), wherein the display control device (50) includes a display control unit (62) that: displays a vehicle image resembling the vehicle (10), and a road surface image resembling a road surface of a cruising lane on which the vehicle (10) is traveling; when the vehicle (10) is to change cruising lane from a first lane to a second lane, displays a track image illustrating a lane change track from the first lane to the second lane that is a track configured by connecting a point on the first lane to a point on the second lane; and changes a position of at least the second lane point along a depth direction in the track image according to a change in the virtual viewpoint.

## Description

### BACKGROUND

### Technical Field

The present disclosure relates to a display control device and a display control program.

### Related Art

A display disclosed in Japanese Patent Application Laid-Open (JP-A) No. 2022-066952 displays an information display screen on a display, with an ego vehicle and an other-vehicle traveling in a cruising lane displayed together with the cruising lane.

However, when displaying a track image illustrating a track for a lane change on a display, if the shape of the track image is fixed, then sometimes the track illustrated by the track image becomes a lane change track in which a far side thereof curves suddenly, becomes a lane change track in which a nearside thereof curves suddenly, or the like. In such cases, a vehicle occupant sometimes feels unsettled by the track image display.

### SUMMARY

A first aspect of the present disclosure is a display control device that performs control to display on a display an image illustrating surrounding conditions of a vehicle as if looking from a virtual viewpoint positioned at a rear of the vehicle, wherein the display control device comprises a display control unit that: performs control to display on the display a vehicle image resembling the vehicle, and a road surface image resembling a road surface of a cruising lane on which the vehicle is traveling; performs control, when the vehicle is to change cruising lane from a first lane to a second lane, to display on the display a track image illustrating a lane change track from the first lane to the second lane that is a track configured by connecting a point on the first lane to a point on the second lane; and changes a position of at least the second lane point along a depth direction in the track image according to a change in the virtual viewpoint.

A second aspect of the present disclosure is the display control device of the first aspect, wherein: the virtual viewpoint change includes a change in position; and the display control unit changes the second lane point position to a position nearer to the vehicle along the depth direction the nearer that a position of the virtual viewpoint is to the vehicle along a horizontal direction.

A third aspect of the present disclosure is the display control device of the first or the second aspect, wherein: the change in virtual viewpoint includes a change in position; and the display control unit changes the second lane point position to a position nearer to the vehicle along the depth direction the higher that a position of the virtual viewpoint is along a vertical direction.

A fourth aspect of the present disclosure is the display control device of any of the first to the third aspect, wherein: the virtual viewpoint change includes a change in gaze direction; and the display control unit changes the second lane point position to a position nearer to the vehicle along the depth direction the smaller that an angle is for an angle formed between the gaze direction of the virtual viewpoint and a vertical direction.

A fifth aspect of the present disclosure is the display control device of any of the first to the fourth aspect, wherein: the second lane point includes a point at a position of a finish end of the track image; and, in cases in which the cruising lane is a lane that curves, the depth direction position of the track image finish end is made a position nearer to the vehicle than a curve start position of the road surface image resembling the road surface of the cruising lane.

A sixth aspect of the present disclosure is a display control program that causes a processor to execute processing performing control to display on a display an image illustrating surrounding conditions of a vehicle as if looking from a virtual viewpoint positioned at a rear of the vehicle, wherein the processing comprises: performing control to display on the display a vehicle image resembling the vehicle, and a road surface image resembling a road surface of a cruising lane on which the vehicle is traveling; performing control, when the vehicle is to change cruising lane from a first lane to a second lane, to display on the display a track image illustrating a lane change track from the first lane to the second lane that is a track configured by connecting a point on the first lane to a point on the second lane; and changing a position along the depth direction of at least the second lane point in the track image according to a change in the virtual viewpoint.

An object of the present disclosure is to provide a display control device and a display control program capable of suppressing a vehicle occupant from feeling unsettled.

The display control device of the first aspect changes the depth direction position of at least the second lane point in the track image according to a change in the virtual viewpoint. As a result thereof, the track image shape is an appropriate shape for the virtual viewpoint change, enabling a vehicle occupant to be suppressed from feeling unsettled.

The display control device of the second aspect changes the second lane point position to a position nearer to the vehicle along the depth direction the nearer that the virtual viewpoint position is to the vehicle along the horizontal direction. This thereby enables the track image shape to be an appropriate shape for the horizontal direction change in the position of the virtual viewpoint.

The display control device of the third aspect changes the second lane point position to a position nearer to the vehicle along the depth direction the higher that the virtual viewpoint position is along the vertical direction. This thereby enables the track image shape to be an appropriate shape for the vertical direction change in the position of the virtual viewpoint.

The display control device of the fourth aspect changes the second lane point position to a position nearer to the vehicle along the depth direction the smaller that the angle is for the angle formed between the gaze direction of the virtual viewpoint and the vertical direction. This thereby enables the track image shape to be an appropriate shape according to a change in the gaze direction from the virtual viewpoint.

In the display control device of the fifth aspect, when the cruising lane is a curved lane, the depth direction position of the track image finish end is made the position nearer to the vehicle than the curve start position of the road surface image resembling the cruising lane road surface. This thereby enables the track image finish end to be suppressed from overlapping with the road surface image.

The present disclosure enables a vehicle occupant to be suppressed from feeling unsettled. Due to suppressing the vehicle occupant from feeling unsettled, mis-operation and unnecessary interference by the vehicle occupant can be prevented.

### BRIEF DESCRIPTION OF THE DRAWINGS

Exemplary embodiments of the present disclosure will be described in detail based on the following figures, wherein:
Fig. 1 is a block diagram illustrating an example of a configuration of a vehicle;
Fig. 2 is a diagram schematically illustrating a state looking at a vehicle cabin front section of a vehicle, as viewed from a vehicle rear side;
Fig. 3 is a diagram illustrating a display region of a meter display;
Fig. 4 is a block diagram illustrating an example of a hardware configuration of a display control device;
Fig. 5 is a diagram to explain a virtual viewpoint;
Fig. 6 is a block diagram illustrating an example of a functional configuration of a display control device;
Fig. 7 is a diagram illustrating an example of a display screen;
Fig. 8 is a diagram to explain a track image;
Fig. 9 is a plan view to explain display processing of a track image;
Fig. 10 is a diagram to explain display processing of a track image; and
Fig. 11 is a flowchart illustrating an example of display control processing.

### DETAILED DESCRIPTION

Detailed description follows regarding an exemplary embodiment to implement the present disclosure, with reference to the drawings.

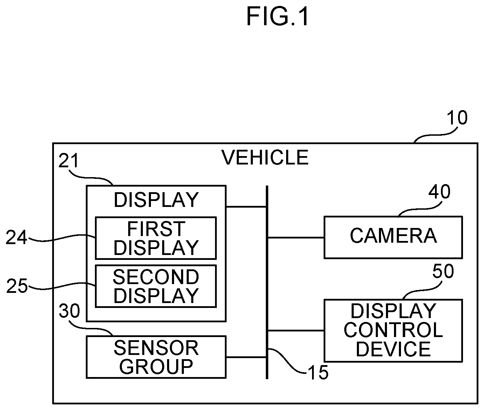

Firstly, a vehicle 10 according to the present exemplary embodiment will be described, with reference to Fig. 1. Fig. 1 is a block diagram illustrating a schematic configuration of the vehicle 10. As illustrated in Fig. 1, the vehicle 10 includes a display 21, a sensor group 30, cameras 40, and a display control device 50. These configuration elements are mutually connected through an external bus (communication bus) 15.

The display 21 displays images related to proposals for operations related to the functions of the vehicle 10, explanations of these functions, and the like. In the present exemplary embodiment, a first display 24 and a second display 25 are provided as the display 21. The first display 24 is an example of a "display" of the present disclosure. Note that details are given later regarding the first display 24 and the second display 25.

The sensor group 30 includes various sensors for detecting a state and surrounding conditions of the vehicle 10. More specifically, the sensor group 30 includes a 3D-LiDAR, a microwave sensor, an infrared sensor, a turn indicator sensor, an acceleration position sensor, a shift position sensor, an illumination sensor, a vehicle speed sensor, a steering angle sensor, an angular velocity sensor, a global positioning system (GPS) sensor, a gyrosensor, and/or an accelerometer. The sensor group 30 outputs detection results from each of the sensors to the display control device 50.

The cameras 40 are imaging devices that each perform imaging using an imaging device such as a charge coupled device (CCD) image sensor, a complementary metal oxide semiconductor (CMOS) image sensor, or the like. The cameras 40 are provided to the front, rear, left side, and right side of the vehicle 10, and image conditions in the periphery of the vehicle 10. For example, images captured by the camera 40 provided at the vehicle front are employed to recognize other-vehicles traveling in front of a vehicle, inter-vehicle distance to other-vehicles, lanes, traffic lights, and the like. The images captured by the cameras 40 are output to the display control device 50. Note that the cameras 40 may be configured by imaging devices used in other applications, such as in a driver recorder, advanced driver assistance system (ADAS), or the like.

The display control device 50 is, for example, an electronic control unit (ECU) that performs various controls.

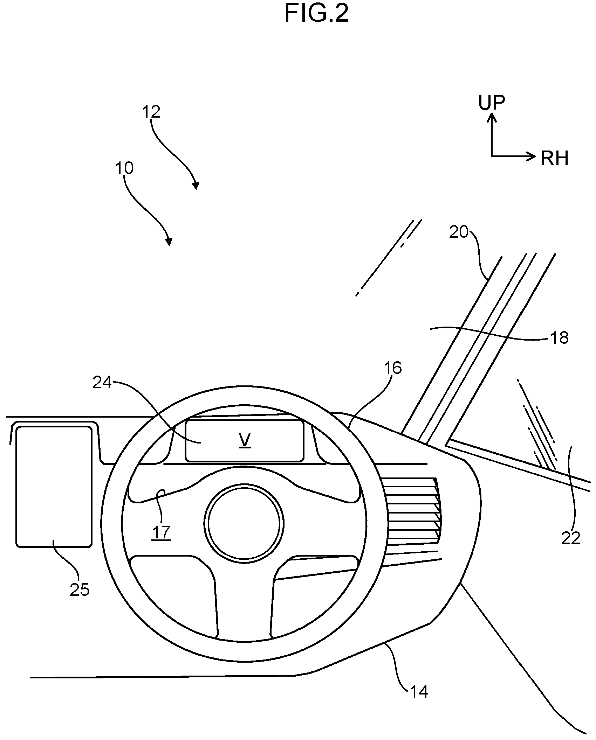

Fig. 2 is a schematic diagram illustrating a front section of an interior of a vehicle cabin 12 of the vehicle 10, as viewed from the vehicle rear side. In Fig. 2, arrow UP indicates upward in a vehicle height direction, and arrow RH indicates a vehicle width direction right side. In the following description, reference to up and down directions and left and right directions respectively indicate up and down in the vehicle height direction, and left and right in the vehicle width direction.

As illustrated in Fig. 2, an instrument panel 14 is provided in the front section interior of the vehicle cabin 12 of the vehicle 10. The instrument panel 14 extends along the vehicle width direction, with a steering wheel 16 provided at a vehicle right side of the instrument panel 14. Namely, the vehicle 10 is, as an example, a right hand drive vehicle with the steering wheel 16 provided on the right, and a driver's seat provided on the vehicle right side. Note that the embodiment of the vehicle 10 is not limited to such an embodiment, and the vehicle 10 may be a left hand drive vehicle with the driver's seat provided on the vehicle left side.

A windshield glass 18 is provided at a front end portion of the instrument panel 14. The windshield glass 18 extends in both the vehicle height direction and the vehicle width direction, and partitions between the interior of the vehicle cabin 12 and the exterior of the vehicle cabin 12.

A vehicle right side end portion of the windshield glass 18 is fixed to a vehicle right side front pillar 20. The front pillar 20 extends in the vehicle height direction, and the windshield glass 18 is fixed to a vehicle width direction inside end portion of this front pillar 20. A front end portion of a front side glass 22 is fixed to a vehicle width direction outside end portion of the front pillar 20. Note that a vehicle left side end portion of the windshield glass 18 is fixed to a vehicle left side front pillar.

A first display 24 equipped with an image display area V is provided to the instrument panel 14. The first display 24 is configured by a meter display provided at a vehicle front side of the driver's seat on the vehicle right side of the instrument panel 14. The first display 24 is connected to various meter instruments installed to the vehicle 10, and is provided at a position falling within the visual field of the driver in a state gazing in the vehicle forward direction.

The second display 25 is also provided to the instrument panel 14. The second display 25 is configured by a center display installed to a vehicle width direction central portion of the instrument panel 14.

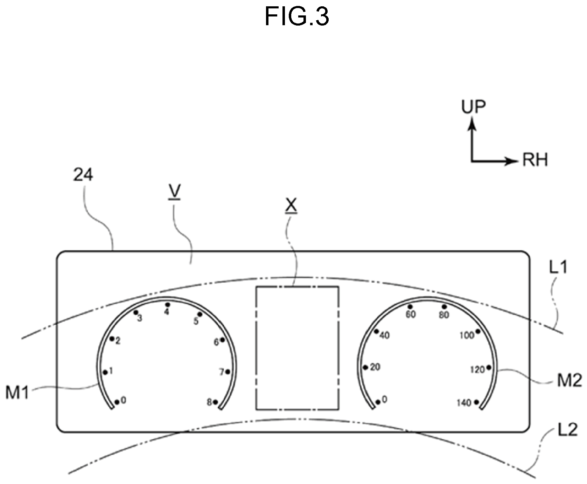

Fig. 3 is a diagram to explain a display area of the meter display, serving as a display area V of the first display 24.

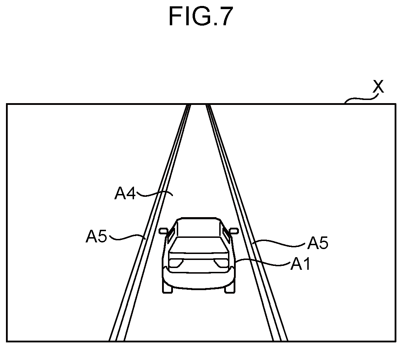

The display area V of the first display 24 is illustrated in Fig. 3. In the present exemplary embodiment, a vehicle image A1 (see Fig. 7), which is an image illustrating the vehicle 10, and a surrounding condition image, which is an image illustrating surrounding conditions of the vehicle 10, are displayed in a display area X, this being part of the display area V. Note that a specific example of such images is described later.

The display area X is a region visible to a driver seated in the driver's seat through an opening 17 in the steering wheel 16 (see Fig. 2). More specifically, as illustrated in Fig. 3, the display area X is center of a visible region between an upper edge boundary line L1 of the opening 17, and a lower edge boundary line L2. Meter displays M1, M2 illustrating measurement instrument meters of the vehicle 10 are displayed in the display area V at the left and right of the display area X.

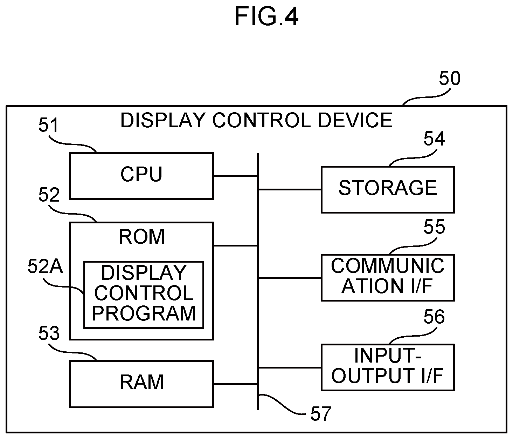

Fig. 4 is a block diagram illustrating a schematic configuration of the display control device 50. The display control device 50 is an example of a "computer" of the present disclosure.

As illustrated in Fig. 4, the display control device 50 is configured including a hardware processor that is a central processing unit (CPU) 51, and memory that is read only memory (ROM) 52, random access memory (RAM) 53, storage 54, a communication interface (I/F) 55, and an input-output I/F 56. Each of the configuration elements are connected together through an internal bus 57 so as to be capable of communicating with each other.

The CPU 51 executes various programs and controls each section. Namely, the CPU 51 reads a program from the ROM 52, and executes the program using the RAM 53 as a work area.

The ROM 52 is stored with various programs and various data. The RAM 53 serves as a work area for temporarily storing programs and/or data.

The storage 54 is configured by a non-transitory storage medium, such as an embedded MultiMediaCard (eMMC), Universal Flash Storage (UFS), or the like, and stores various programs and various data. The storage 54 and the CPU 51 are connected by the eMMC or UFS interface

Moreover, each of the components provided in the display control device 50, such as the ROM 52, the storage 54, and the like, are preferably a medium having tamper resistance, such as a hardware security module (HSM).

The communication I/F 55 is an interface for connecting to other ECUs. This interface employs a communication standard by Ethernet (registered trademark).

The input-output I/F 56 is an interface to communicate with onboard devices installed to the vehicle 10, such as the display 21, the sensor group 30, and the cameras 40.

A display control program 52A is stored in the ROM 52. The display control program 52A is a program to execute various processing in the CPU 51. When the display control program 52A is executed, the display control device 50 uses the configuration illustrated in Fig. 4 to execute processing based on the display control program 52A. The display control program 52A is an example of a "display control program" of the present disclosure.

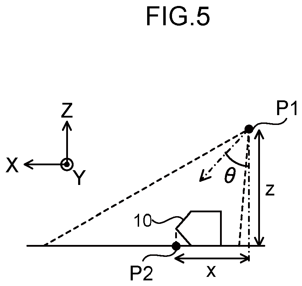

The display control device 50 according to the present exemplary embodiment performs control to display a surrounding conditions image on a display area X of the first display 24, serving as an example of a display, this being an image illustrating surrounding conditions of the vehicle 10 as if looking from a virtual viewpoint P1 positioned at a rear of the vehicle 10, as in the example illustrated in Fig. 5. The virtual viewpoint P1 is a viewpoint in virtual space looking down on the vehicle 10 and the periphery thereof from a designated position to the rear and above the vehicle 10 at a designated viewpoint angle. The virtual viewpoint P1 is, for example, a position of a virtual camera. In the example of Fig. 5, two straight dashed-lines originating at the virtual viewpoint P1 indicate an angle of view of the virtual viewpoint P1.

In the present exemplary embodiment, the vehicle 10, and objects other than the vehicle 10 that have been detected using the sensor group 30 and the cameras 40, such as other-vehicles, pedestrians, and the like, are mapped onto 3-dimensional virtual space. Positions in this 3-dimensional virtual space are expressed in an orthogonal coordinate system with an origin P2, this being a point where a vertical line at the front of the vehicle 10 contacts the road surface at the vehicle width direction center of the vehicle 10. Positions in this 3-dimensional space are expressed in a 3-dimensional orthogonal coordinate system with the vehicle front-rear direction of the vehicle 10, serving as an example of a horizontal direction, as an X axis, the vehicle width direction as a Y axis, and the vehicle height direction, serving as an example of a vertical direction, as a Z axis.

The position of the virtual viewpoint P1 is expressed by coordinates in this 3-dimensional orthogonal coordinate system. Moreover, as illustrated in Fig. 5, directions of a gaze from the virtual viewpoint P1 are expressed by an angle θ, this being the angle formed between the gaze direction of the virtual viewpoint P1 and the vertical direction. In the example of Fig. 5, the gaze direction of the virtual viewpoint P1 is indicated by a single-dot broken line arrow. The display control device 50 generates a surrounding condition image as if looking at the surroundings of the vehicle 10 from the designated position in the virtual space of virtual viewpoint P1 at the designated angle θ, and performs control to display this surrounding condition image in the display area X.

However, sometimes the virtual viewpoint P1 is changed. In the present exemplary embodiment, changes to the virtual viewpoint P1 include a change in position and a change in gaze direction. For example, the driver sometimes changes the position and gaze direction of the virtual viewpoint P1 in cases in which the position and the gaze direction of the virtual viewpoint P1 are driver-settable in the vehicle 10. Moreover, for example, sometimes the driving mode is changed when the virtual viewpoint P1 is set with different positions and gaze directions according to respective driving modes corresponding to plural driving assistance levels of the vehicle 10. More specifically, sometimes the virtual viewpoint P1 is set with a first position and gaze direction in a manual driving mode, which is a first driving mode, and the virtual viewpoint P1 is set with a second position and gaze direction in an adaptive cruise control (ACC) mode, which is a second driving mode. The ACC mode is a driving mode when a cruise control function has been switched ON to execute following travel in which acceleration and deceleration are performed automatically. while keeping vehicle speed in a pre-set range and maintaining an inter-vehicle distance to the vehicle ahead. The driver is accordingly able to ascertain driving mode by looking at the display area X due to the virtual viewpoint P1 being set according to driving mode.

Moreover, for example for cases in which the virtual viewpoint P1 is set with different positions and gaze directions corresponding to plural respective vehicle speed ranges, sometimes the vehicle speed has changed. More specifically, the virtual viewpoint P1 is set with a first position and gaze direction when the vehicle speed is in a range set for low speeds, and the virtual viewpoint P1 is set with a second position and gaze direction when the vehicle speed is in a range set for high speeds.

Moreover, the vehicle 10 according to the present exemplary embodiment is installed with lane change assist (LCA), this being an example of a driving assistance function. The LCA functions to perform assistance with lane changing, such as steering assistance and surrounding monitoring assistance during lane changes.

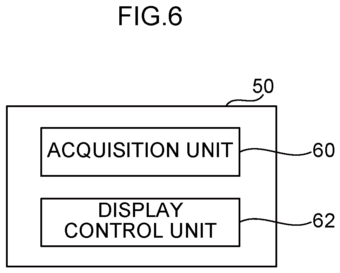

A functional configuration of the display control device 50 according to the present exemplary embodiment will now be described, with reference to Fig. 6. As illustrated in Fig. 6, the display control device 50 includes an acquisition unit 60 and a display control unit 62. The CPU 51 functions as the acquisition unit 60 and the display control unit 62 by executing the display control program 52A.

The acquisition unit 60 acquires various information acquirable by the vehicle 10. More specifically, as the various information, the acquisition unit 60 acquires detection information of detection results of the various sensors configuring the sensor group 30, images captured by the cameras 40, and the like.

The display control unit 62 performs display control related to display on the display 21. As such display control and as illustrated in the example in Fig. 7, based on the detection information acquired by the acquisition unit 60, the display control unit 62 performs control to display in the display area X of the first display 24 a vehicle image A1 resembling the vehicle 10, which is the ego vehicle, a road surface image A4 resembling a road surface of a cruising lane that is the lane the vehicle 10 is traveling in, and demarcation line images A5 resembling left and right demarcation lines demarcating the cruising lane. When objects other than the vehicle 10 have been detected, such as a vehicle ahead traveling in front of the vehicle 10, an other-vehicle traveling in an adjacent lane, or a pedestrian, the display control unit 62 also performs control to display object images resembling such objects in the display area X. The road surface image A4, the demarcation line images A5, and object images are examples of a surrounding condition image. Note that the display control unit 62 may perform control to display each of these images on the second display 25, and may perform control to display on both the first display 24 and the second display 25.

The road surface image A4 is displayed as a strip from bottom to top at the left-right direction center of the display area X. The road surface image A4 is displayed such that a width thereof gradually becomes narrower on progression from bottom to top in the display area X. The demarcation line images A5 are respectively displayed at the left and right of the road surface image A4. The demarcation line images A5 are also displayed as strips from bottom to top of the display area X. The demarcation line images A5 are also displayed such that the width thereof gradually becomes narrower on progression from bottom to top of the display area X. The width of the demarcation line images A5 is displayed narrower than the width of the road surface image A4. The object images are displayed at positions in the display area X corresponding the positions of detected objects.

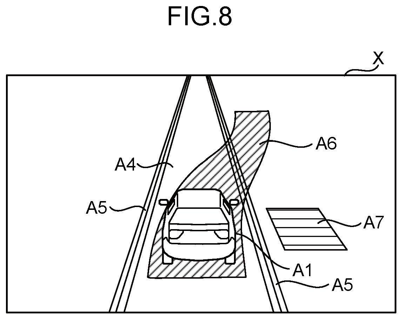

Moreover, as in an example illustrated in Fig. 8, in cases in which LCA has been switched ON and the vehicle 10 is to change cruising lane from a first lane to a second lane, the display control unit 62 performs control to display in the display area X a track image A6 illustrating a lane change track from the first lane to the second lane, this being a track configured by connecting a point on the first lane to a point on the second lane. The example of Fig. 8 illustrates a case in which the vehicle 10 performs a lane change to the lane adjacent on the right. The track image A6 is displayed with a narrower width than the first lane and the second lane, and is displayed such that the width thereof gradually narrows on progression from bottom to top of the display area X.

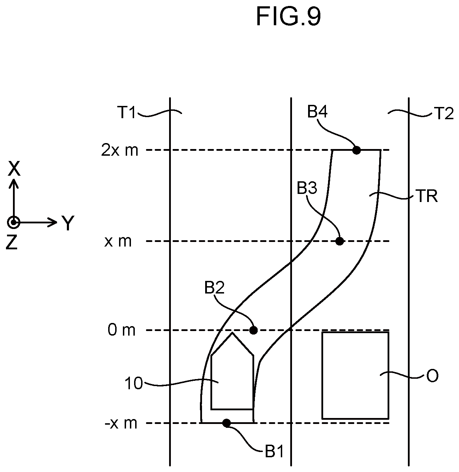

Moreover, the display control unit 62 performs control to display a notification image A7 to notify that LCA has been switched ON at a position in the second lane at the side of the vehicle 10. The notification image A7 is displayed with a narrower width than the second lane, and is displayed such that the width thereof gradually narrows on progression from bottom to top of display area X. The example of Fig. 8 illustrates a case in which the shape of the notification image A7 is a rectangular shape. Description follows regarding a specific example of track image A6 display control processing as executed by the display control unit 62 according to the present exemplary embodiment, with reference to Fig. 9.

As illustrated in Fig. 9, the display control unit 62 sets markers B1 to B4 to draw the track image A6 illustrating a lane change track TR in virtual space. Markers B1, B2 are set on the first lane T1, markers B3, B4 are set on the second lane T2. The marker B1 is positioned behind the vehicle 10 and corresponds to a start end of the lane change track TR. The marker B2 has the same x coordinate as the origin P2 (see Fig. 5), and corresponds to a position where the track TR starts to curve (hereafter referred to as "curve start position"). The marker B3 is positioned in front of the vehicle, and corresponds to a position where curving of the track TR finishes (hereafter referred to as "curve finish position"). The marker B4 is positioned in front of the vehicle and corresponds to a finish end of the track TR. When referring in general to the markers B1 to B4 without discriminating therebetween, the final digit will be omitted and they will be called markers B. An object O in the example of Fig. 9 is a rectangular object arranged in virtual space for generating the notification image A7. A length of the object O in the X axis direction is a length falling between the marker B1 and the marker B2. Note that although the example of Fig. 9 illustrates a case in which distances between X axis direction adjacent markers B are equidistant, there is no limitation to distances between X axis direction adjacent markers B being equidistant. Moreover, the number of the markers B may be any number capable of representing the track TR and is not limited to four.

The track TR is an S-shaped track configured by connecting the markers B1 to B4 together in sequence from rear to front in the progression direction of the vehicle 10. The display control unit 62 performs control to generate the track image A6 as if looking at the track TR from the virtual viewpoint P1, and to display the track image A6 in the display area X. In the present exemplary embodiment, the display control unit 62 changes the positions of at least the markers B3, B4 along the X axis direction according to a change in the virtual viewpoint P1 (see Fig. 5). Namely, the display control unit 62 changes at least the position of the second lane point along the depth direction in the track image A6 according to changes in the virtual viewpoint P1. Reference here to the depth direction means a depth direction of a screen when viewed by a vehicle 10 occupant, and is equivalent to the X axis direction in virtual space and equivalent to the height direction of the display area X.

More specifically, the display control unit 62 changes the positions of the markers B3, B4 to positions that are nearer to the vehicle 10 along the X axis direction the nearer that the X axis direction position of the virtual viewpoint P1 is to the vehicle 10. Namely, the display control unit 62 changes the second lane point position in the track image A6 to a position that is nearer to the vehicle image A1 along the depth direction the nearer that the X axis direction position of the virtual viewpoint P1 is to the vehicle 10.

The display control unit 62 also changes the positions of the markers B3, B4 to positions nearer to the vehicle 10 along the X axis direction the higher the position of the virtual viewpoint P1 is along the vertical direction. Namely, the display control unit 62 changes the second lane point position in the track image A6 to a position that is nearer to the vehicle image A1 along the depth direction the higher that the position of the virtual viewpoint P1 is along the vertical direction.

Moreover, the display control unit 62 changes the positions of the markers B3, B4 to positions nearer to the vehicle 10 along the X axis direction the smaller the above defined angle θ is (see Fig. 5). Namely, the display control unit 62 changes the second lane point position in the track image A6 to a position that is nearer to the vehicle image A1 along the depth direction the smaller the angle θ is.

In addition to the markers B3, B4, the display control unit 62 also changes the positions of the marker B1 along the X axis direction similarly to the markers B3, B4. Namely, the position of the marker B1 positioned at the rear of the vehicle 10 is changed in the opposite direction along the X axis direction to the markers B3, B4 positioned in front of the vehicle 10.

For example, to derive the positions of the markers B according to the position and gaze direction of the virtual viewpoint P1, the display control unit 62 employs a computation equation that is a function input with the position and the angle θ of the virtual viewpoint P1 and outs the positions of each of the markers B, such as function to satisfy relationships between the position and gaze direction of the virtual viewpoint P1 and the markers B1, B3, B4 as described above. The display control unit 62 thereby generates the S-shaped track image A6 that starts to curve from the curve start position and finishes curving at the curve finish position according to the position and angle θ of the virtual viewpoint P1.

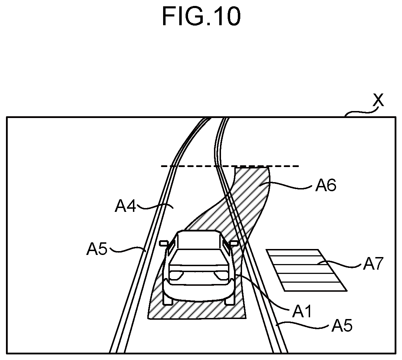

As illustrated in Fig. 10, in cases in which the cruising lane is a lane that curves, the display control unit 62 may make the depth direction position of the finish end of the track image A6 at a position nearer to the vehicle 10 than the curve start position of the road surface image A4. In the example illustrated in Fig. 10, the curve start position of the road surface image A4 is illustrated by a dashed straight line. This thereby enables the finish end of the track image A6 to be suppressed from overlapping with the road surface image A4.

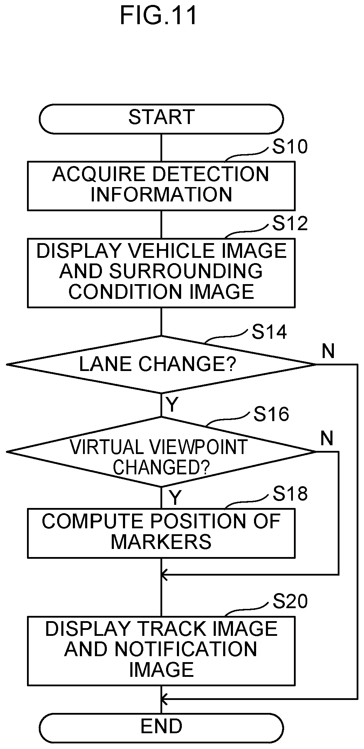

Description follows regarding operation of the display control device 50 according to the present exemplary embodiment, with reference to Fig. 11. By executing the display control program 52A, the CPU 51 executes the display control processing illustrated in Fig. 11. The display control processing is, as an example, repeatedly executed at a specific time interval.

At step S10 of Fig. 11, the acquisition unit 60 acquires, as the various information, detection information such as detection results from the various sensors configuring the sensor group 30 and images captured by the cameras 40. At step S12, based on the detection information acquired at step S10, the display control unit 62 performs control to display the vehicle image A1 and the surrounding condition image in the display area X.

At step S14, the display control unit 62 determines whether or not LCA has been switched ON and whether or not the vehicle 10 is to change the cruising lane from the first lane to the second lane. Processing transitions to step S16 when this determination is affirmative determination. At step S16, the display control unit 62 determines whether or not there has been a change in the virtual viewpoint P1. Processing transitions to step S18 when this determination is affirmative determination.

At step S18, the display control unit 62 derives positions of the markers B according to the position and gaze direction of the post-change virtual viewpoint P1, as described above. Processing transitions to step S20 when step S18 has finished. Processing transitions to step S20, without executing the processing of step S18, when the determination of step S16 is negative determination.

At step S20, the display control unit 62 performs control, as described above, to generate the track image A6 as if looking at the track TR, which is configured by connecting the positions of the markers B derived most recently at step S18 together, from the virtual viewpoint P1, and displays the track image A6 in the display area X. The display control unit 62 also performs control to display the notification image A7 in the display area X. The display control processing is ended when the processing of step S20 has finished. Moreover, the display control processing is ended without executing the processing of steps S16 to S20 in cases in which the determination of step S14 is negative determination.

As described above, in the present exemplary embodiment the shape of the track image A6 is changed according to changes in the virtual viewpoint P1. As a result thereof, the track illustrated by the track image A6 is suppressed from becoming a lane change track in which a far side thereof curves suddenly, becoming a lane change track in which a nearside thereof curves suddenly, or the like, thereby enabling a vehicle 10 occupant to be suppressed from feeling unsettled.

Note that various processing executed by the CPU 51 reading and executing software (a program) in the above exemplary embodiment may be executed by various processors other than a CPU. Examples of such processors include programmable logic devices (PLD) that allow circuit configuration to be modified post-manufacture, such as field-programmable gate arrays (FPGA), and dedicated electronic circuits, these being processors including a circuit configuration custom-designed to execute specific processing, such as application specific integrated circuits (ASIC). Moreover, the various processing may be executed by any one of these various types of processor, or may be executed by a combination of two or more of the same type or different types of processor (such as plural FPGAs, or a combination of a CPU and an FPGA). The hardware structure of these various types of processors is, more specifically, an electronic circuit combining circuit elements such as semiconductor elements.

Moreover, although the above exemplary embodiment describes a mode in which the display control program 52A was pre-stored (installed) on the ROM 52, there is no limitation thereto. The display control program 52A may be provided in a format recorded on a non-transitory recording medium such as a compact disc read only memory (CD-ROM), digital versatile disc read only memory (DVD-ROM), universal serial bus (USB) memory, or the like. Moreover, the display control program 52A may be in a format downloadable from an external device over a network. Note that the technology of the present disclosure is applicable to programs and program products.

Although the vehicle 10 according to an exemplary embodiment has been described above, various embodiments may be implemented within a range not departing from the spirit of the present invention.

## Claims

1. A display control device (50) for performing control to display on a display (21) an image illustrating surrounding conditions of a vehicle (10) as if looking from a virtual viewpoint positioned at a rear of the vehicle (10), wherein the display control device (50) comprises a display control unit (62) that is configured to:
perform control to display on the display (21) a vehicle image resembling the vehicle (10), and a road surface image resembling a road surface of a cruising lane on which the vehicle (10) is traveling;
perform control, when the vehicle (10) is to change cruising lane from a first lane to a second lane, to display on the display (21) a track image illustrating a lane change track from the first lane to the second lane that is a track configured by connecting a point on the first lane to a point on the second lane; and
change a position of at least the second lane point along a depth direction in the track image according to a change in the virtual viewpoint.

2. The display control device (50) of claim 1, wherein:
the virtual viewpoint change includes a change in position; and
the display control unit (62) is configured to change the second lane point position to a position nearer to the vehicle along the depth direction the nearer that a position of the virtual viewpoint is to the vehicle along a horizontal direction.

3. The display control device (50) of claim 1 or claim 2, wherein:
the change in virtual viewpoint includes a change in position; and
the display control unit (62) is configured to change the second lane point position to a position nearer to the vehicle along the depth direction the higher that a position of the virtual viewpoint is along a vertical direction.

4. The display control device (50) of any of claims 1 to 3, wherein:
the virtual viewpoint change includes a change in gaze direction; and
the display control unit (62) is configured to change the second lane point position to a position nearer to the vehicle (10) along the depth direction the smaller that an angle is for an angle formed between the gaze direction of the virtual viewpoint and a vertical direction.

5. The display control device (50) of any of claims 1 to 4, wherein:
the second lane point includes a point at a position of a finish end of the track image; and
in cases in which the cruising lane is a lane that curves, the depth direction position of the track image finish end is made a position nearer to the vehicle (10) than a curve start position of the road surface image resembling the road surface of the cruising lane.

6. A display control program that causes a processor to execute processing performing control to display on a display (21) an image illustrating surrounding conditions of a vehicle (10) as if looking from a virtual viewpoint positioned at a rear of the vehicle (10), wherein the processing comprises:
performing control to display on the display (21) a vehicle image resembling the vehicle (10), and a road surface image resembling a road surface of a cruising lane on which the vehicle (10) is traveling;
performing control, when the vehicle (10) is to change cruising lane from a first lane to a second lane, to display on the display (21) a track image illustrating a lane change track from the first lane to the second lane that is a track configured by connecting a point on the first lane to a point on the second lane; and
changing a position along the depth direction of at least the second lane point in the track image according to a change in the virtual viewpoint.
